# EUROPÄISCHE PATENTSCHRIFT

(11) **EP 3 590 170 B1**
(45) Veröffentlichungstag und Bekanntmachung des Hinweises auf die Patenterteilung: **17.02.2021**
(21) Anmeldenummer: 18716937.0
(22) Anmeldetag: 28.03.2018
(51) Int. Cl.: H02J 3/18, H02J 3/24

(54) **ANLAGE UND VERFAHREN ZUM STABILISIEREN EINES WECHSELSPANNUNGSNETZES**
SYSTEM AND METHOD FOR STABILIZING AN ALTERNATING VOLTAGE GRID
CIRCUIT ET PROCÉDÉ POUR STABILISER UN RÉSEAU À TENSION ALTERNATIVE

(30) Priorität: 27.04.2017 DE 102017207133
(43) Veröffentlichungstag der Anmeldung: 08.01.2020
(73) Patentinhaber: Siemens Energy Global GmbH & Co. KG, 81739 München (DE)
(72) Erfinder: MORGENSTERN, Ralph, 91052 Erlangen (DE); NIEMANN, Bernd, 91054 Erlangen (DE); PILZ, Georg, 91099 Poxdorf (DE)
(86) Internationale Anmeldenummer: PCT/EP2018/057848
(87) Internationale Veröffentlichungsnummer: WO 2018/197140

(56) Entgegenhaltungen:
- CN-U- 205 544 288
- US-A1- 2005 015 182
- US-A1- 2008 278 121
- US-A1- 2013 207 623
- US-A1- 2016 139 578

## Beschreibung

Die Erfindung betrifft eine Anlage zum Stabilisieren eines Wechselspannungsnetzes mit einem Umrichter, der mit dem Wechselspannungsnetz verbindbar ist, und dazu eingerichtet ist, Blindleistung mit dem Wechselspannungsnetz auszutauschen.

Eine solche Anlage ist aus der WO 2010/115471 A1 bekannt. Die bekannte Anlage wird üblicherweise dazu eingesetzt, das Wechselspannungsnetz zu stabilisieren, wobei Spannungsschwankungen im Wechselspannungsnetz reduziert werden, Blindleistung mit dem Wechselspannungsnetz ausgetauscht wird und Störungen im Wechselspannungsnetz minimiert werden.

Der Umrichter der bekannten Anlage ist ein sogenannter modularer Mehrstufenumrichter. Er weist eine Mehrzahl von Umrichterarmen auf, wobei die Umrichterarme zum Beispiel in einer Dreiecks- oder einer Sternschaltung miteinander verbunden sein können. Jeder Umrichterarm umfasst eine Reihenschaltung mehrerer zweipoliger Schaltmodule. Jedes Schaltmodul umfasst dabei mehrere Halbleiterschalter sowie einen Zwischenkreiskondensator, die in einer dem Fachmann bekannten Vollbrückenschaltung miteinander verbunden sind.

Ein solcher Umrichter wird oftmals auch als STATCOM (Static Synchronous Compensator) bezeichnet. Die Halbleiterschalter der Schaltmodule des STATCOM sind voneinander unabhängig ansteuerbar, wodurch der STATCOM eine stufenförmige Wechselspannung mit einem nahezu beliebigen zeitlichen Verlauf generieren kann.

Der bekannten Anlage haftet der Nachteil der relativ hohen Betriebskosten an.

Weitere Anordnungen, mittels deren eine Blindleistung bzw. ein Leistungsfluss in einem Wechselspannungsnetz beeiflussbar ist, sind in der US 2005/015182 A1, der US 2016/139578 A1, der US 2008/278121 A1, und der CN 205 544 288 U offenbart.

Die Aufgabe der Erfindung ist es, eine artgemäße Anlage vorzuschlagen, die möglichst effizient und kostengünstig ist.

Die Aufgabe wird erfindungsgemäß durch eine Anlage gemäß dem Patentanspruch 1 gelöst. Demnach umfasst die Anlage ferner eine Drosselanordnung mit variablen Drosselspulen, die mit dem Wechselspannungsnetz verbindbar ist, sowie eine Regelungseinrichtung, die dazu eingerichtet ist, eine Blindleistung im Wechselspannungsnetz mittels des Umrichters und mittels der Drosselanordnung zu regeln. Die Drosselanordnung bildet einen sogenannten VSR (varible shunt reactor). Dieser kann bei Anschluss an das Wechselspannungsnetz die Blindleistung beeinflussen. Die variablen Drosseln können beispielsweise Drosseln sein, deren Induktivität mittels eines Stufenschalters variabel einstellbar ist. Jede der Drosseln kann mit einem Eisenkern und/oder einem Luftspalt ausgestattet sein.

Die Anlage kombiniert somit den in Betrieb relativ kostenintensiven Umrichter mit einer relativ kostengünstigen Drosselanordnung in der Weise, dass diese mittels einer gemeinsamen Regelungseinrichtung möglichst effizient zu einer Stabilisierung des Wechselspannungsnetzes eingesetzt werden können. Der Umrichter muss dabei nur noch für einen kleineren Leistungsbereich ausgelegt werden, als bei der aus dem Stand der Technik bekannten Anlage. Dies senkt die Kosten der Anlage zusätzlich.

In Abhängigkeit von geeigneten Regelungsvorgaben ist die Regelungseinrichtung in der Lage, wahlweise mittels der Drosselanordnung oder des Umrichters eine Blindleistung im Wechselspannungsnetz zu regeln und Spannungsschwankungen im Wechselspannungsnetz entgegenzuwirken.

Zweckmäßigerweise ist die Regelungseinrichtung derart zum Regeln der Blindleistung mittels des Umrichters und der Drosselanordnung eingerichtet, dass die Blindleistung bei transienten Spannungsschwankungen im Wechselspannungsnetz mittels des Umrichters und in einem stationären Arbeitsbereich des Wechselspannungsnetzes mittels der Drosselanordnung regelbar ist. Da der Umrichter sehr schnell und flexibel auf schnelle Spannungsschwankungen im Wechselspannungsnetz reagieren kann, ist sein Einsatz in diesen Fällen besonders effektiv. Transiente Spannungsschwankungen sind hierbei solche, die innerhalb von wenigen Sekunden auftreten. Insbesondere können mittels des Umrichters transiente Unter- bzw. Überspannungen im Zeitbereich von 2 bis 3 Netzperioden kompensiert werden. Variable Drosseln sind aufgrund von Verzögerungen beim Schalten von beispielsweise mechanischen Stufenschaltern und dergleichen für eine Blindleistungsregelung auf solchen kurzen Zeitskalen nicht geeignet. Auf einer Zeitskala von über einer Minute wird in diesem Zusammenhang entsprechend bereits von einem stationären Zustand ausgegangen. Im stationären Zustand kann demnach die Drosselanordnung die Stabilisierung des Wechselspannungsnetzes übernehmen. Auf diese Weise kann ein besonders hoher Kostenvorteil bei hoher Leistungsfähigkeit der Anlage erreicht werden.

Gemäß einer Ausführungsform der Erfindung ist die Regelungseinrichtung dazu eingerichtet, den Umrichter derart anzusteuern, dass Schaltspannungsschwankungen, die im Wechselspannungsnetz aufgrund von Schaltvorgängen der Drosselanordnung entstehen, mittels des Umrichters zumindest teilweise kompensierbar sind. Auf diese Weise kann ein besonders vorteilhafter Synergie-Effekt der Anlage erreicht werden: Die Zuverlässigkeit der Anlage wird dadurch erhöht, dass die Stabilisierungseigenschaften der Drosselanordnung mittels des Umrichters verbessert werden. Die Schaltspannungsschwankungen können beispielsweise durch Schalten des Stufenschalters auftreten, denn jede stufenartige Änderung der Induktivität der Drosselanordnung erzeugt eine Spannungsschwankung im Wechselspannungsnetz als Systemantwort. Diese Schaltspannungsschwankungen sind im Allgemeinen unerwünscht.

Vorzugsweise umfasst die Drosselanordnung zu einem isolierten Sternpunkt verschaltete variable Drosseln, wobei jede der Drosseln an ihrem dem Sternpunkt abgewandten Ende galvanisch mit einer Schalteinheit verbunden ist, mittels der die Drossel mit einer ihr zugeordneten Phase des Wechselspannungsnetzes verbindbar ist. Jede der variablen Drosseln kann aus einer Reihenschaltung von Einzeldrosseln aufgebaut sein. Die Anzahl der variablen Drosseln entspricht somit geeigneterweise der Anzahl der Phasen des Wechselspannungsnetzes.

Gemäß einer Ausführungsform der Erfindung sind die Drosselanordnung und der Umrichter mittels einer gemeinsamen Schaltanordnung mit dem Wechselspannungsnetz verbindbar. Auf diese Weise ist eine besonders einfache und kostengünstige Anbindung der Anlage an das Wechselspannungsnetz realisierbar.

Gemäß einer weiteren Ausführungsform der Erfindung sind die Drosselanordnung und der Umrichter jeweils mittels separater Schaltanordnungen mit dem Wechselspannungsnetz verbindbar. Da die Drosselanordnung und der Umrichter gemäß dieser Ausführungsform separat und voneinander unabhängig mit dem Wechselspannungsnetz verbindbar bzw. davon trennbar sind, ergibt sind in diesem Fall eine besonders hohe Flexibilität beim Betrieb der Anlage.

Vorzugsweise ist der Umrichter ein modularer Mehrstufenumrichter. Auf diese Weise ist der bereits zuvor beschriebene STATCOM bereitgestellt, der für eine besonders flexible Blindleistungskompensation im Wechselspannungsnetz sorgen kann.

Bevorzugt ist die Drosselanordnung für einen Leistungsbereich zwischen +-100 Mvar (Mega Volt Ampere) und +-300 Mvar ausgelegt. Mit dieser Auslegung kann mittels der Drosselanordnung auch ein Wechselspannungsnetz mit Spannungen von über 100 kV (z.B. Phase zu Phase) stabilisiert werden.

Vorzugsweise ist der Umrichter für einen Leistungsbereich zwischen +-10 Mvar bis +-400 Mvar ausgelegt. Damit ist der Umrichter für Blindleistungskompensation in Hochspannungsnetzen ausreichend ausgelegt.

Die Erfindung betrifft ferner ein Verfahren zum Stabilisieren eines Wechselspannungsnetzes mittels einer Anlage mit einem Umrichter, der mit dem Wechselspannungsnetz verbindbar ist.

Ein solches Verfahren ist aus der bereits zuvor genannten WO 2010/115471 A1 bekannt.

Die Aufgabe der Erfindung ist es, ein solches Verfahren anzugeben, das möglichst kostengünstig und zuverlässig ist.

Die Aufgabe wird durch ein artgemäßes Verfahren erfindungsgemäß dadurch gelöst, dass die Anlage ferner eine Drosselanordnung mit variablen Drosselspulen umfasst, die mit dem Wechselspannungsnetz verbindbar ist, wobei mittels einer Regelungseinrichtung eine Blindleistung im Wechselspannungsnetz mittels des Umrichters und mittels der Drosselanordnung geregelt wird.

Die Vorteile des erfindungsgemäßen Verfahrens ergeben sich sinngemäß aus den bereits im Zusammenhang mit der erfindungsgemäßen Anlage beschriebenen Vorteilen.

Bevorzugt wird die Blindleistung bei transienten Spannungsschwankungen im Wechselspannungsnetz mittels des Umrichters und in einem stationären Arbeitsbereich des Wechselspannungsnetzes mittels der Drosselanordnung geregelt. Insbesondere kann im stationären Arbeitsbereich der Umrichter in den Arbeitspunkt 0 Mvar zurückkehren, was die Betriebskosten der Anlage vorteilhaft senkt.

Besonders bevorzugt wird der Umrichter mittels der Regelungseinrichtung derart angesteuert, dass Schaltspannungsschwankungen, die im Wechselspannungsnetz aufgrund von Schaltvorgängen der Drosselanordnung entstehen, mittels des Umrichters zumindest teilweise kompensiert werden.

Alle zuvor beschriebenen bevorzugten Merkmale der erfindungsgemäßen Anlage können, allein oder in Kombination, selbstverständlich auch im Zusammenhang mit dem erfindungsgemäßen Verfahren realisiert werden.

Die Erfindung soll im Folgenden anhand von Ausführungsbeispielen erläutert werden, die in den Figuren 1 bis 3 dargestellt sind.
Figur 1 zeigt ein erstes Ausführungsbeispiel einer erfindungsgemäßen Anlage in einer schematischen Darstellung;
Figur 2 zeigt ein zweites Ausführungsbeispiel der erfindungsgemäßen Anlage in einer schematischen Darstellung;
Figur 3 zeigt ein Beispiel eines Schaltmoduls eines Umrichters für eine der Anlagen der Figuren 1 und 2.

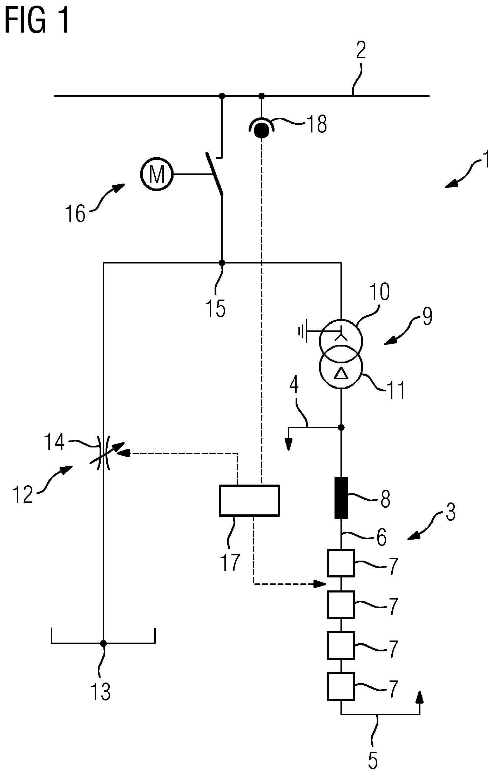

In Figur 1 ist in einem sogenannten Einliniendarstellung ("single line diagram") eine Anlage 1 zum Stabilisieren eines Wechselspannungsnetzes 2 dargestellt. Das Wechselspannungsnetz 2 ist im dargestellten Beispiel ein Energieversorgungsnetz mit einer Spannung von 400 kV und einer Frequenz von 50 Hz.

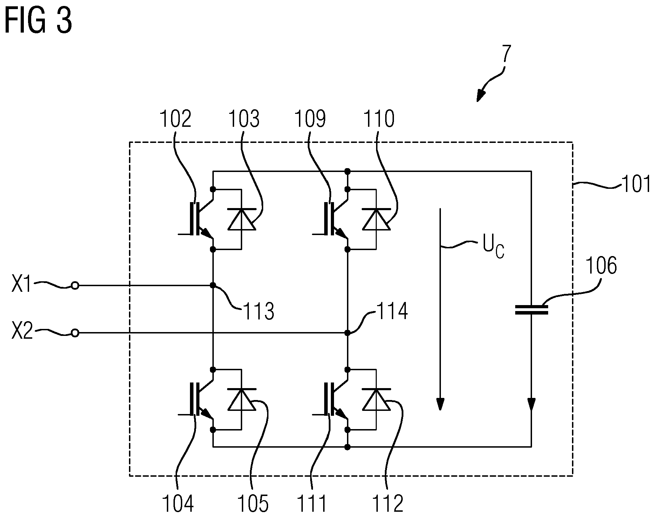

Die Anlage 1 umfasst einen Umrichter 3. Der Umrichter 3 umfasst drei Umrichterarme, die miteinander in einer Dreieckschaltung verbunden sind, was mittels Pfeile 4 und 5 angedeutet ist. In der Einliniendarstellung der Figur 1 ist nur der erste Umrichterarm 6 figürlich dargestellt. Die beiden übrigen Umrichterarme des Umrichters 3 sind zum ersten Umrichterarm 6 gleichartig aufgebaut. Der erste Umrichterarm 6 weist eine Reihenschaltung zweipoliger Schaltmodule 7 sowie eine Arminduktivität 8 auf. Auf den Aufbau der Schaltmodule 7 wird in der nachfolgenden Figur 3 näher eingegangen. Der Umrichter 3 ist über einen Transformator 9 mit dem Wechselspannungsnetz 2 verbunden. Eine netzseitige Wicklung 10 des Transformators 9 ist dabei in einer geerdeten Sternwicklung, eine umrichterseitige Wicklung 11 des Transformators entsprechend in einer Deltawicklung ausgebildet. Der Umrichter bildet demnach einen STATCOM und ist im dargestellten Beispiel für eine Leistung von +-50 Mvar ausgelegt.

Die Anlage 1 umfasst ferner eine Drosselanordnung 12, die drei variable Drosseln umfasst, die zu einem Sternpunkt 13 miteinander verbunden sind. Die Verbindung des Sternpunktes mit dem Erdpotenzial kann dabei isoliert (also nicht geerdet), direkt (widerstandslos) oder beispielsweise auch über eine Impedanz erfolgen. In der Darstellung der Figur 1 ist lediglich eine erste variable Drossel 14 der drei gleichartigen Drosseln der Drosselanordnung 12 figürlich dargestellt. Die Drosselanordnung 12 ist zu einem Blindleistungsaustausch mit dem Wechselspannungsnetz 2 in einem Leistungsbereich von 200 Mvar eingerichtet. Die erste Drossel 14 ist auf ihrer dem Sternpunkt 13 abgewandten Seite mit einem Potenzialpunkt 15 und über den Potenzialpunkt 15 mit einer Schalteinrichtung 16 verbunden. Entsprechendes gilt auch für die beiden übrigen Drosseln der Drosselanordnung 12. Auch die netzseitige Wicklung 10 des Transformators 9 ist mit dem Potenzialpunkt 15 verbunden. Die Regelung der Drosseln erfolgt mittels Ansteuerung eines entsprechend ansteuerbaren Stufenschalters.

Die Anlage 1 umfasst ferner eine Regelungseinrichtung 17. Die Regelungseinrichtung 17 ist zur Ansteuerung der Halbleiterschalter des Umrichters 3 und der variablen Drosseln eingerichtet. Die Regelungseinrichtung 17 ist mit einer Messvorrichtung 18 zum Messen von Spannung und/oder Strom im Wechselspannungsnetz 2 verbunden. Damit kann mittels der Regelungseinrichtung eine Blindleistung im Wechselspannungsnetz 2 geregelt werden. Dazu steuert die Regelungseinrichtung 17 die Drosselanordnung 12 und den Umrichter 3 entsprechend einem geeigneten Regelungsalgorithmus an. Insbesondere bei transienten Spannungsschwankungen im Wechselspannungsnetz 2 wird die Blindleistung mittels des Umrichters 3 geregelt. Ansonsten wird die Blindleistung mittels der Drosselanordnung 12 geregelt.

Treten im Wechselspannungsnetz 2 Schaltspannungsschwankungen aufgrund von Schaltvorgängen in den variablen Drosseln der Drosselanordnung 12 auf, so werden diese mittels des Umrichters 3 zumindest teilweise kompensiert, wofür die Regelungseinrichtung mittels geeigneter Ansteuerung der Schaltmodule 7 bzw. der Halbleiterschalter der Schaltmodule 7 sorgt.

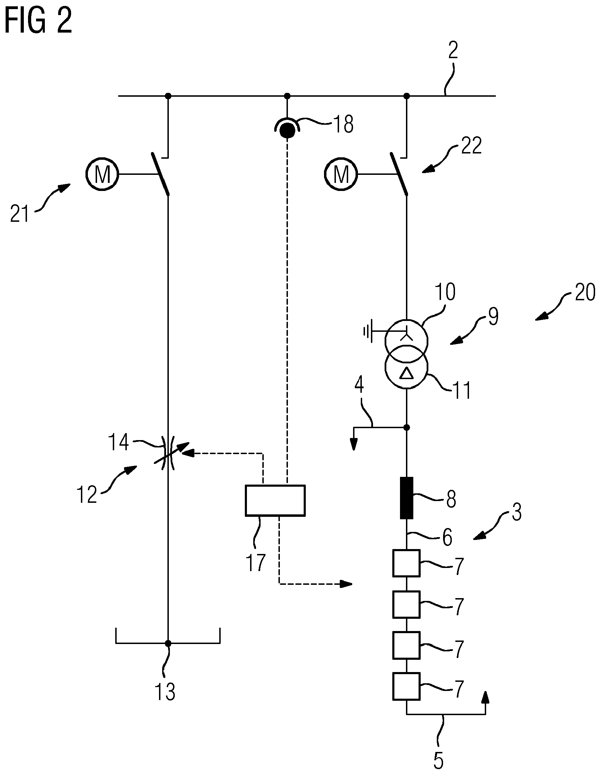

In Figur 2 ist eine weitere Anlage 20 zur Stabilisierung eines Wechselspannungsnetzes dargestellt. Die Anlage 20 und die Anlage 1 der Figur 1 sind weitgehend gleichartig aufgebaut. Aus Übersichtlichkeitsgründen sind daher gleiche und gleichartige Elemente in den Figuren 1 und 2 mit gleichen Bezugszeichen versehen. Um Wiederholungen zu vermeiden wird im Folgenden lediglich auf die Unterschiede zwischen den Anlagen 1 und 20 eingegangen.

Im Unterschied zur Anlage 1 der Figur 1 ist die Drosselanordnung 12 der Anlage 20 über eine eigene Schaltanordnung 21 mit dem Wechselspannungsnetz 2 verbunden. Ebenso ist der Umrichter 3 über eine eigene Schaltanordnung 22 mit dem Wechselspannungsnetz 2 verbunden. Eine solche Anordnung ermöglicht eine höhere Flexibilität im Betrieb der Anlage 20. Die Schaltanordnungen umfassen den Phasen des Wechselspannungsnetzes zugeordnete Schaltelemente.

Ein Beispiel eines Schaltmoduls 7 in Form einer Vollbrückenschaltung 101 ist in Figur 3 schematisch dargestellt. Die Vollbrückenschaltung 101 weist einen ersten Halbleiterschalter 102 in Form eines IGBT, dem eine Freilaufdiode 103 antiparallel geschaltet ist sowie einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Ferner umfasst die Vollbrückenschaltung 101 einen dritten Halbleiterschalter 109 in Form eines IGBT, dem eine Freilaufdiode 110 antiparallel geschaltet ist sowie einen vierten Halbleiterschalter 111 in Form eines IGBT, dem eine Freilaufdiode 112 antiparallel geschaltet ist. Die Durchlassrichtung der beiden Halbleiterschalter 109 und 111 ist gleichgerichtet. Die Halbleiterschalter 102 und 104 mit ihnen zugeordneten Freilaufdioden 103, 105 bilden somit eine Reihenschaltung, die einer durch die Halbleiterschalter 109, 111 und die zugeordneten Freilaufdioden 110 und 112 gebildeten Reihenschaltung parallel geschaltet ist. Ein Zwischenkreiskondensator 106 ist parallel zu den beiden Reihenschaltungen angeordnet. Der erste Anschluss X1 ist an einem Potenzialpunkt 113 zwischen den Halbleiterschaltern 102, 104 angeordnet, der zweite Anschluss X2 ist an einem Potenzialpunkt 114 zwischen den Halbleiterschaltern 109, 111 angeordnet.

Durch eine geeignete Steuerung der Leistungshalbleiter 102, 104, 109 und 111 kann die an den Anschlüssen X1, X2 abfallende Spannung erzeugt werden, die der am Zwischenkreiskondensator 106 abfallenden Spannung Uc, der am Zwischenkreiskondensator 106 abfallenden Spannung jedoch mit entgegengesetzter Polarität (-Uc) oder der Spannung null entspricht.

## Patentansprüche

1. Anlage (1) zum Stabilisieren eines Wechselspannungsnetzes (2) mit einem Umrichter (3), der mit dem Wechselspannungsnetz (2) verbindbar ist, und dazu eingerichtet ist, Blindleistung mit dem Wechselspannungsnetz (2) auszutauschen,
**dadurch gekennzeichnet, dass** die Anlage (1) ferner umfasst
- eine Drosselanordnung (12) mit variablen Drosselspulen (14), die mit dem Wechselspannungsnetz (2) verbindbar ist, sowie
- eine Regelungseinrichtung (17), die dazu eingerichtet ist, eine Blindleistung im Wechselspannungsnetz (2) mittels des Umrichters (3) und mittels der Drosselanordnung (12) zu regeln.

2. Anlage (1) nach Anspruch 1, wobei die Regelungseinrichtung (17) derart zum Regeln der Blindleistung mittels des Umrichters (3) und der Drosselanordnung (12) eingerichtet ist, dass die Blindleistung bei transienten Spannungsschwankungen im Wechselspannungsnetz (2) mittels des Umrichters (3) und in einem stationären Arbeitsbereich des Wechselspannungsnetzes (2) mittels der Drosselanordnung (12) regelbar ist.

3. Anlage (1) nach einem der Ansprüche 1 oder 2, wobei die Regelungseinrichtung (17) dazu eingerichtet ist, den Umrichter (3) derart anzusteuern, dass Schaltspannungsschwankungen, die im Wechselspannungsnetz (2) aufgrund von Schaltvorgängen der Drosselanordnung (12) entstehen, mittels des Umrichters (3) zumindest teilweise kompensierbar sind.

4. Anlage (1) nach einem der vorangehenden Ansprüche, wobei die Drosselanordnung (12) zu einem Sternpunkt (13) verschaltete variable Drosseln (14) umfasst, wobei jede der Drosseln (14) an ihrem dem Sternpunkt (13) abgewandten Ende galvanisch mit einer Schalteinheit (16) verbunden ist, mittels der die Drossel (14) mit einer ihr zugeordneten Phase des Wechselspannungsnetzes (2) verbindbar ist.

5. Anlage (1) nach einem der vorangehenden Ansprüche, wobei die Drosselanordnung (12) und der Umrichter (3) mittels einer gemeinsamen Schaltanordnung (16) mit dem Wechselspannungsnetz (2) verbindbar sind.

6. Anlage (20) nach einem der Ansprüche 1 bis 4, wobei die Drosselanordnung (12) und der Umrichter (3) jeweils mittels separater Schaltanordnungen (21, 22) mit dem Wechselspannungsnetz (2) verbindbar sind.

7. Anlage (1) nach einem der vorangehenden Ansprüche, wobei der Umrichter (3) ein modularer Mehrstufenumrichter ist.

8. Anlage (1) nach einem der vorangehenden Ansprüche, wobei die Drosselanordnung (12) für einen Leistungsbereich zwischen +-100 Mvar und +-300 Mvar ausgelegt ist.

9. Anlage (1) nach einem der vorangehenden Ansprüche, wobei der Umrichter (3) für einen Leistungsbereich zwischen +-10 Mvar bis +-400 Mvar ausgelegt ist.

10. Verfahren zum Stabilisieren eines Wechselspannungsnetzes (2) mittels einer Anlage (1) mit einem Umrichter (3), der mit dem Wechselspannungsnetz (2) verbindbar ist,
**dadurch gekennzeichnet, dass** die Anlage (1) ferner eine Drosselanordnung (12) mit variablen Drosselspulen (14) umfasst, die mit dem Wechselspannungsnetz (2) verbindbar ist, wobei
mittels einer Regelungseinrichtung (17) eine Blindleistung im Wechselspannungsnetz (2) mittels des Umrichters (3) und mittels der Drosselanordnung (14) geregelt wird.

11. Verfahren nach Anspruch 10, wobei die Blindleistung bei transienten Spannungsschwankungen im Wechselspannungsnetz (2) mittels des Umrichters (3) und in einem stationären Arbeitsbereich des Wechselspannungsnetzes (2) mittels der Drosselanordnung (12) geregelt wird.

12. Verfahren nach einem der Ansprüche 10 oder 11, wobei der Umrichter (3) mittels der Regelungseinrichtung (17) derart angesteuert wird, dass Schaltspannungsschwankungen, die im Wechselspannungsnetz (2) aufgrund von Schaltvorgängen der Drosselanordnung (12) entstehen, mittels des Umrichters (3) zumindest teilweise kompensiert werden.

## Claims

1. System (1) for stabilizing an AC voltage grid (2), having a converter (3), which can be connected to the AC voltage grid (2) and is configured for exchanging reactive power with the AC voltage grid (2),
**characterized in that**
the system (1) also comprises
- an inductor arrangement (12) having variable inductor coils (14), which can be connected to the AC voltage grid (2), and
- a control device (17), which is configured to control a reactive power in the AC voltage grid (2) by means of the converter (3) and by means of the inductor arrangement (12).

2. System (1) according to Claim 1, wherein the control device (17) is configured for controlling the reactive power by means of the converter (3) and the inductor arrangement (12) in such a way that during transient voltage fluctuations in the AC voltage grid (2) the reactive power can be controlled by means of the converter (3) and in a stationary operating region of the AC voltage grid (2) by means of the inductor arrangement (12).

3. System (1) according to either of Claims 1 or 2, wherein the control device (17) is configured for controlling the converter (3) in such a way that switching voltage fluctuations that arise in the AC voltage grid (2) as a result of switching operations of the inductor arrangement (12) can be at least partially compensated by means of the converter (3).

4. System (1) according to one of the preceding claims, wherein the inductor arrangement (12) comprises variable inductors (14) that are interconnected to form a star point (13), wherein each of the inductors (14) is electrically connected at its opposite end to the star point (13) to a switching unit (16), by means of which the inductor (14) can be connected to a phase of the AC voltage grid (2) associated thereto.

5. System (1) according to one of the preceding claims, wherein the inductor arrangement (12) and the converter (3) can be connected to the AC voltage grid (2) by means of a common switching arrangement (16).

6. System (20) according to one of Claims 1 to 4, wherein the inductor arrangement (12) and the converter (3) can each be connected to the AC voltage grid (2) by means of separate switching arrangements (21, 22).

7. System (1) according to one of the preceding claims, wherein the converter (3) is a modular multilevel converter.

8. System (1) according to one of the preceding claims, wherein the inductor arrangement (12) is designed for a power range between +-100 Mvar and +-300 Mvar.

9. System (1) according to one of the preceding claims, wherein the converter (3) is designed for a power range between +-10 Mvar to +-400 Mvar.

10. Method for stabilizing an AC voltage grid (2) by means of a system (1) having a converter (3), which can be connected to the AC voltage grid (2),
**characterized in that**
the system (1) also comprises an inductor arrangement (12) having variable inductor coils (14), which can be connected to the AC voltage grid (2), wherein
by means of a control device (17), a reactive power in the AC voltage grid (2) is controlled by means of the converter (3) and by means of the inductor arrangement (14).

11. Method according to Claim 10, wherein during transient voltage fluctuations in the AC voltage grid (2) the reactive power is controlled by means of the converter (3) and in a stationary operating region of the AC voltage grid (2) by means of the inductor arrangement (12).

12. Method according to either of Claims 10 or 11, wherein the converter (3) is controlled by means of the control device (17) in such a way that switching voltage fluctuations that arise in the AC voltage grid (2) as a result of switching operations of the inductor arrangement (12) are at least partially compensated by means of the converter (3).

## Revendications

1. Montage (1) de stabilisation d'un réseau (2) à tension alternative, comprenant un onduleur (3), qui peut être connecté au réseau (2) à tension alternative et qui est conçu pour échanger de la puissance réactive avec le réseau (2) à tension alternative,
**caractérisé en ce que**
le montage (1) comprend, en outre,
- un agencement (12) de bobine à bobines (14) d'arrêt variables, qui peut être connecté au réseau (2) à tension alternative, ainsi que
- un dispositif (17) de régulation, qui est conçu pour réguler une puissance réactive dans le réseau (2) à tension alternative au moyen de l'onduleur et au moyen de l'agencement (12) de bobine.

2. Montage (1) suivant la revendication 1, dans lequel le dispositif (17) de régulation est conçu pour réguler la puissance réactive, au moyen de l'onduleur (3) et de l'agencement (12) de bobine, de manière à pouvoir régler la puissance réactive lors de fluctuations transitoires de tension dans le réseau (2) à tension alternative, au moyen de l'onduleur (3) et, dans une plage de travail fixe du réseau (2) à tension alternative, au moyen de l'agencement (12) de bobine.

3. Montage (1) suivant l'une des revendications 1 ou 2, dans lequel le dispositif (17) de régulation est conçu pour commander l'onduleur (3), de manière à pouvoir compenser, au moins en partie, des fluctuations de tension de coupure, qui se produisent dans le réseau (2) à tension alternative en raison de processus de coupure de l'agencement (12) de bobine.

4. Montage (1) suivant l'une des revendications précédentes, dans lequel l'agencement (12) de bobine comprend des bobines (14) variables connectées à un point (13) neutre, chacune des bobines (14) étant connectée, à son extrémité loin du point (13) neutre galvaniquement, à une unité (16) de coupure, au moyen de laquelle la bobine (14) peut être reliée à une phase qui lui est associée du réseau (2) à tension alternative.

5. Montage (1) suivant l'une des revendications précédentes, dans lequel l'agencement (12) de bobine et l'onduleur (3) peuvent être connectés au réseau (2) à tension alternative au moyen d'un agencement (16) commun de coupure.

6. Montage (1) suivant l'une des revendications 1 à 4, dans lequel l'agencement (12) de bobine et l'onduleur (3) peuvent être reliés au réseau (2) à tension alternative, respectivement, au moyen d'agencements (21, 22) de coupure distincts.

7. Montage (1) suivant l'une des revendications précédentes, dans lequel l'onduleur (3) est un onduleur modulaire à plusieurs étages.

8. Montage (1) suivant l'une des revendications précédentes, dans lequel l'agencement (12) de bobine est conçu pour une plage de puissance comprise entre +-100 Mvar et +-300 Mvar.

9. Montage (1) suivant l'une des revendications précédentes, dans lequel l'onduleur (3) est conçu pour un plage de puissance allant de +-10 Mvar à +-400 Mvar.

10. Procédé de stabilisation d'un réseau (2) à tension alternative au moyen d'un onduleur (3), qui peut être connecté au réseau (2) à tension alternative,
**caractérisé en ce que**
le montage (1) comprend, en outre, un agencement (12) de bobine à bobines (14) d'arrêt variables, qui peut être connecté au réseau (2) à tension alternative, dans lequel
on régule, au moyen d'un dispositif (17) de régulation, une puissance réactive dans le réseau (2) à tension alternative au moyen de l'onduleur (3) et au moyen de l'agencement (14) de bobine.

11. Procédé suivant la revendication 10, dans lequel on régule la puissance réactive, lors de fluctuations de tension transitoire dans le réseau (2) à tension alternative, au moyen d'un onduleur (3) et, dans une plage de travail fixe du réseau (2) à tension alternative, au moyen de l'agencement (12) de bobine.

12. Procédé suivant l'une des revendications 10 ou 11, dans lequel on commande l'onduleur (3) au moyen du dispositif (17) de régulation, de manière à compenser, au moins en partie, au moyen de l'onduleur (3), les fluctuations de tension de coupure, qui se créent dans le réseau (2) à tension alternative en raison d'opérations de coupure de l'agencement (12) de bobine.
